# EUROPEAN PATENT SPECIFICATION

(11) **EP 3 394 182 B1**
(45) Date of publication and mention of the grant of the patent: **26.07.2023**
(21) Application number: 16822169.5
(22) Date of filing: 22.12.2016
(51) Int. Cl.: B05D 7/14, B32B 15/085, C09D 143/04, C09D 183/00, C08L 23/14, B32B 27/28, B32B 27/32

(54) **MULTILAYER ASSEMBLY INCLUDING A COMPOSITE MATERIAL**
MEHRSCHICHTIGE ANORDNUNG MIT VERBUNDWERKSTOFF
ENSEMBLE MULTICOUCHE COMPRENANT UN MATÉRIAU COMPOSITE

(30) Priority: 22.12.2015 EP 15202001
(43) Date of publication of application: 31.10.2018
(73) Proprietor: FINPROJECT S.p.A., 62010 Morrovalle (MC) (IT)
(72) Inventor: CASALE, Antonello, 26100 Cremona (CR) (IT); MALMASSARI, Clara, 43017 San Secondo Parmense (PR) (IT); POLI, Riccardo Andrea, 43039 Salsomaggiore Terme (PR) (IT)
(74) Representative: Zanoli, Enrico
(86) International application number: PCT/EP2016/082383
(87) International publication number: WO 2017/109073

(56) References cited:
- GB-A- 2 410 308
- US-A1- 2006 201 544
- US-A1- 2011 190 411

## Description

### Cross-reference to related applications

This application claims priority to European application No. 15202001.2 filed on 22/12/2015.

### Technical Field

The present invention relates to a multilayer assembly comprising a metal surface and a coating which adheres directly on such surface and which includes a cross-linked composite of a polymer and a filler in the form of fibres as defined in the claims.

### Background Art

Polyolefins, in particular polyethylene and polypropylene, have been extensively used as coating for various supports, including metals such as steel and aluminium.

Metal articles are usually coated to improve performance and to prevent or to limit corrosion, especially upon exposure to weather agents and to corrosive substances such as those used in the chemical industry. An important field of application of metal coating is the oil and gas industry, particularly the piping for oil and gas extraction and transportation.

Polymeric materials such as fusion-bonded epoxy resins, that are generally used for pipes internal and external coatings in the oil and gas industry, suffer from several drawback such as low impact resistance, permeability to moisture, tendency to disbond (i.e. to peel off the metal surface) when exposed to hot and wet conditions for long periods of time.

Polyolefin coatings have also been proposed for their low permeability to moisture, flexibility, tough and relatively low cost (especially polyethylene and poypropylene). However, polyolefins generally show poor adhesion to metal and a layer of adhesive must be placed between the metal surface and the outer coating, which results in a multistep manufacturing process, that is longer and more expensive than direct coating, and potential delamination of the coating from the metal, due to ageing and failure of the adhesive.

The need is still felt for a coating of metal articles the is efficient, durable and cost-effective.

### Summary of invention

To solve this problem, the present invention provides multilayer assembly comprising at least the following layers as specified in detail in claim 1:
i. a metal surface (S);
ii. a coating, adhering directly on surface (S), of a composite material (C) comprising a cross-linked polymer (XPO) and a filler in the form of fibres (F), wherein XPO is the cross-linked form of a cross-linkable polymer (SPO) comprising recurring units deriving from at least one olefin and recurring units of at least one monomer bearing silane groups and is chemically linked to filler (F) via the silane groups.

The present invention also provides a process for the production of the multilayer assembly as defined above, as specified in detail in claim 8, comprising the steps of:
a) providing a polyolefin comprising cross-linkable silanol group (SPO);
b) mixing (SPO) with a filler in the form of fibres (F),having reactive hydroxyl, ethoxyl, carboxyl or epoxy groups on the surface to obtain a composition (C1);
c) coating the metal surface (S) with composition (C1);
d) optionally, cross-linking the silanol groups of (SPO) in C1 with the reactive hydroxyl groups on the surface of the filler to obtain a composite material (C).

In another aspect, the present invention provides an article according to claim 10 comprising the multilayer assembly as above defined.

### Brief description of drawings

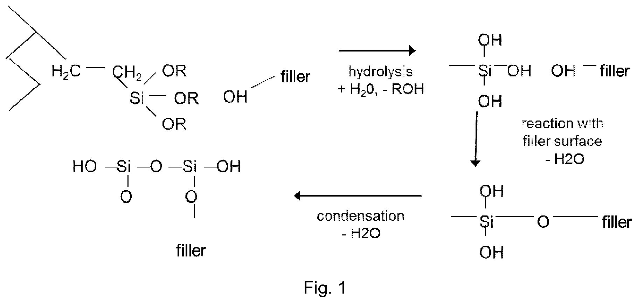

Figure 1 depicts a scheme for the formation of chemical bonds between the polymer XPO and the surface of the filler.

### Description of embodiments

Unless otherwise specified, in the context of the present invention the amount of a component in a composition is indicated as the ratio between the weight of the component and the total weight of the composition multiplied by 100 (also: "wt%" or "% in weight").

In the context of the present invention, the terms "cross-linkable polymer (SPO)", "cross-linkable polyolefin comprising hydrolysable silane groups (SPO)" and "polyolefin comprising cross-linkable silanol group (SPO)" are used interchangeably in the context of the present invention to mean a polymer having one or more backbone chains consisting of recurring units derived from at least one hydrogenated monomer as defined above and one or more hydrolysable silane pendant groups.

The terms "silanol groups", "silane groups" and "hydrolysable silane groups" are used interchangeably in the context of the present invention to denote groups of formula -Si-O-X, wherein X is a hydrogen atom or an alkyl group, which, after hydrolysis and/or polycondensation, are capable of cross-linking by forming -Si-O-Si- links between various polyolefin chains.

The term "polyolefin comprising cross-linked silane groups [cross-linked polymer (XPO)]" is understood to mean a polymer having one or more backbone chains consisting of recurring units derived from at least one unsaturated monomer, i.e. bearing at least one C=C moiety, and one or more -Si-O-Si- links between said chains and/or one or more -Si-O- links between said chains and other surfaces such as the surface of the filler.

The cross-linked polymer (XPO) is advantageously obtainable by hydrolysis and/or polycondensation from the cross-linkable polymer (SPO).

The cross-linkable polymer (SPO) is a polyolefin, preferably a cross-linkable polyethylene (PE) or polypropylene (PP) comprising hydrolysable silane groups [cross-linkable polymer (PO)].

The cross-linkable polymer (SPO) typically comprises from 0.1% to 3%, preferably from 1.0% to 2.5% or 1.8% to 2.0% by weight, based on the total weight of the cross-linkable polymer (SPO), of hydrolysable silane groups.

The degree of crosslinking of the cross-linkable polymer (SPO) may be determined according to techniques generally known in the art, such as according to EN ISO 10147 .

The cross-linked polymer (XPO) typically has a degree of cross-linking of at least 40% by weight, preferably at least 50% by weight, more preferably of at least 65% by weight.

The cross-linked polymer (XPO) typically has a degree of cross-linking of at most 95% by weight, preferably of at most 80% by weight.

The degree of cross-linking of the cross-linked polymer (XPO) is defined as being the fraction of the cross-linked polymer (XPO) insoluble in hot xylene (extraction for eight hours at the boiling point of xylene according to EN ISO 10147 standard procedure) after hydrolysis and/or condensation of the cross-linkable polymer (SPO), that it is carried out by so-called moisture curing. Moisture curing can be made in ambient conditions (i.e. 23°C, 50% relative humidity), in hot water (from 40°C to 95°C) or through a vapour stream at 115°C.

The cross-linkable polymer (SPO) has a melt flow index comprised between 0.1 g/10 min and 70 g/10 min, preferably in the range between 1 to 10 g/10 min, as measured according to ASTM D1238 standard procedure under a load of 2.16 Kg at 190°C.

The cross-linkable polymer (SPO) preferably has a standard density comprised between 860 kg/m³ and 970 kg/m³, preferably between 900 kg/m³ and 965 kg/m³, more preferably between 920 kg/m³ and 945 kg/m³ or between 945 kg/m³ and 965 kg/m³.

In the context of the present invention, the standard density is measured according to ASTM D792-08 standard procedure (method B, absolute ethanol).

The cross-linkable polymer (SPO) is typically obtainable by processing one or more polyolefins in the presence of a compound comprising hydrolysable silane groups.

Said polyolefin is preferably a polyethylene such as an ethylene homopolymer or a copolymer of ethylene with another monomer selected from C₄-C₈ alkenes. Alternatively, the polyolefin is preferably a polypropylene such as an propylene homopolymer or a copolymer of propylene with another monomer selected from C₄-C₈ alkenes.

Said polyolefin is more preferably at least one or more blend of polyethylene selected from a group of a low density polyethylene, a medium density polyethylene, a high density polyethylene, ultra high density polyethylene, a very low density polyethylene ultra low density polyethylene and linear low density polyethylene according to the definition generally known to the person skilled in the art, e.g. according to the classification reported in ASTM D883 - 12 and in Ullmann's Encyclopedia of Industrial Chemistry 6th Edition, 2000, "Polyolefins".

The cross-linkable polymer (SPO) is generally manufactured by melt processing one or more polyolefins in the presence of a compound comprising hydrolysable silane groups and of a compound capable of generating free radicals.

Non-limitative examples of compounds comprising hydrolysable silane groups suitable for use in the manufacture of the cross-linkable polymer (SPO) include copolymers including recurring units bearing vinyl silanes.

The cross-linkable polymer (SPO) is generally manufactured by melt processing one or more polyolefins in the presence of from 0.5% to 3.5% by weight, based on the total weight of the polyolefin(s), of a vinyl silane and from 0.01% to 0.5% by weight, based on the total weight of the polyolefin(s), of a compound capable of generating free radicals.

Very good results have been obtained with high density polyethylene.

The polyethylene used in the process for manufacturing the cross-linkable polymer (SPO) has a standard density comprised between 860 kg/m³ and 970 kg/m³, preferably between 880 kg/m³ and 950 kg/m³.

The polyethylene has a melt flow index comprised between 0.1 g/10 min and 70 g/10 min, more preferably between 5 g/10 min and 20 g/10 min, as measured according to ASTM D1238 standard procedure under a load of 2.16 Kg at 190°C.

By the term "compound capable of generating free radical" it is hereby intended for example, peroxides and azo compounds, or by ionizing radiation, etc. A suitable azo- compound is azobisisobutyl nitrile (AIBN).

As non-limiting examples, suitable radical initiators are those reported in WO 2012/082261 A (DOW GLOBAL TECHNOLOGIES, LLC) 6/21/2012 Organic free radical are preferred, such as any one of the peroxide initiators, for example, dicumyl peroxide, di-tert-butyl peroxide, t-butyl perbenzoate, benzoyl peroxide, cumene hydroperoxide, t-butyl peroctoate, methyl ethyl ketone peroxide, 2,5-dimethyl-2,5-di-(t-butyl peroxy)-hexane, lauryl peroxide and tert butyl peracetate.

By the term "vinyl silane" it is hereby intended to denote a silane comprising at least one vinyl functional group. The vinyl silane used in the process for manufacturing the composition (C) is usually a vinyl silane of formula R¹R²R³SiY, wherein Y denotes a hydrocarbon radical comprising at least one vinyl functional group, R¹ denotes a hydrolysable group and R ² and R³ denote, independently, an alkyl group or a hydrolysable group R¹. The hydrolysable group R¹ may be chosen from radicals of the alkoxy, acyloxy, oxime, epoxy and amine type. R¹ is preferably an alkoxy radical containing from 1 to 6 carbon atoms.

It is preferred to use a vinyl silane of formula R¹R²R³SiY, wherein R² and R³ are also hydrolysable groups R¹ as defined above.

Good results have been obtained with vinyltrialkoxysilanes wherein R¹, R² and R³ are alkoxy groups containing from 1 to 4 carbon atoms. Particularly preferred are vinyltriethoxysilane and vinyltrimethoxysilane.

The amount of vinyl silane used in the process for manufacturing the composition (C2-a) is preferably comprised between 1.5% and 2.2% preferably from 1.8 to 2.0 % by weight, based on the total weight of the polyolefin(s).

Without wishing to be bound by theory, linking of the siloxanes of the polymer to the surface of the filler is believed to take place as summarised in Figure 1. Silanoxyl groups are made available via hydrolysis of the alkoxysilane groups and react with OH groups present on the filler surface to form a covalent bond between the filler and the polymer.

Preferably, in the multilayer assembly of the invention XPO is a cross-linked polyethylene or a cross-linked polypropylene comprising recurring units of at least one monomer bearing silane groups.

Preferably, in the multilayer assembly of the invention the filler (F) is selected from the group consisting of long and short fibres glass, montmorillonite, zeolite, quartz, wollastonite, and mixtures thereof.

Preferably, in the multilayer assembly of the invention the filler comprises or consists of glass fibres. Glass fibers are produced having various compositions. General applications are identified by means of a letter designation. The letter designation represents a family of glasses that have provided acceptable performance to the end-user in the intended application. Standard specification for glass fiber strands is provided in ASTM standard D578 - 05, and equivalents thereof. In the context of the present invention, as non-limiting examples, glass fibres can be made of C glass, E glass, S glass or a mixture thereof. Preferably, glass fibres in the assembly of the invention are made of E glass.

The length and diameter of the glass fibres in the assembly of the invention are not particularly limited. As non-limiting examples, the average fibre diameter can be from 5 to 20 micrometers, such as 8 or 10 to 15 micrometers, and the standard cut length can vary from 3 to 10 mm, such as 4, 4.5, 5 or 6 to 8 mm.

The mechanical properties of the glass fibres in the assembly of the invention are not particularly limited. As non-limiting examples, their tensile strength can be from 75 to 200 MPa, such as 80, 90 or 100 to 150 or 180 MPa, teir tensile elongation (%) can be from 1 to 5, such as 2 or 3 to 4.5 or 4 %, their impact strength (Charpy, ISO 179, unnotched) is from 40 to 80 kJ/m², such as 50 or 60 or 65 to 70 or 75 kJ/m².

Preferably, in the multilayer assembly of the invention the metal surface (S) is aluminium or an aluminium alloy, iron and iron alloys, cast iron, steel in various grades , magnesium alloys, titanium or titanium alloys, copper and copper alloys. Preferably, (S) is an aluminium, aluminium alloy or steel surface. Non-limitative examples of aluminium alloys are those conventionally designed according to the system of the North American Aluminium Association (AA) for cast and wrought alloys and non-limitative examples of steel grades are those conventionally designed according to UNI EN 10020.

Preferably, in the multilayer assembly of the invention the ratio of the filler weight to the total weight of the composite material (C) is 5 to 50%, preferably 20 to 40% or 25 to 40%.

It was found that the composite material (C) comprising a cross-linked polymer (XPO) and a filler in the form of fibres (F), wherein XPO is a polyolefin comprising silane groups [cross-linked polymer (PO)] and is chemically linked to filler (F) via the silane groups has low shrinkage and good dimensional stability after injection molding, cross-linking and heat shock (e.g. for 10 minutes as 140°C, 200°C and 260°C).

In addition, said composite material (C) exhibits good UV resistance (aging at 120°C for 1 month) and good chemical resistance after immersion tests at 50°C for 30 days in sulphuric acid 50 wt%, water, NaOH solution, diesel fuel, methyl ethyl ketone, or ethanol. The assembly of the invention also exhibits low sensitivity to moisture, good weathering resistance (UV and moisture combination), good combined UV and heating resistance behaviour, good tensile, flexural and impact performances, excellent DTUL (heat distortion temperature), outstanding creep performances at high temperature (tested up to 270°C at 0.2 MPa loaded according to IEC 60811-2-1), dimensional stability after heat shock (tested up to 260°C) and low tendency to yellowing. The composite (C) as defined above shows dimensional stability after injection molding and low density vs other GF filled material and low tendency to yellowing.

It was found that in the assembly according to the present invention the adhesion between the metal layer and coating comprising the composite material (C) comprising a silane-grafted resin as defined above is remarkably higher than the adhesion obtainable using a non-grafted resin.

Composite material (C) can be mixed (via addition, suitably during compounding or extrusion/injection) with a specific catalytic masterbatch containing, but not limited to, anti-oxidants and/or UV absorbers and/or flame retardants and/or anti-dripping agents and/or pigments and reflective materials and/or silanol condensation catalyst.

As non-limiting example, suitable anti-oxidants can be chosen from a wide range of known anti-oxidants that are compatible with polyolefins. Examples include but are not limited to phenolic or phosphitic anti-oxidants, such as alkylated monophenols, alkylthiomethylphenols, hydroquinones, alkylated hydroquinones, tocopherols, hydroxylated thiodiphenyl ethers, alkylidenebisphenols, acylaminophenols. Other examples include but are not limited to O-, N- and S-benzyl compounds, hydroxybenzylated malonates, aromatic hydroxybenzyl compounds, triazine compounds, aminic antioxidants, aryl amines, diaryl amines, polyaryl amines, oxamides, metal deactivators, phosphites, phosphonites, benzylphosphonates, ascorbic acid (vitamin C), compounds which destroy peroxide, hydroxylamines, nitrones, benzofuranones, indolinones, and the like and mixtures thereof. More preferably, the antioxidant is a member of the class of bis-phenolic antioxidants. Suitable specific bis-phenolic antioxidants include 2,2'-ethylidenebis(4,6-di-t-butylphenol); 4,4'-butylidenebis(2-t-butyl-5-methylphenol); 2,2'-isobutylidenebis(6-t-butyl-4-methylphenol); and 2,2'-methylenebis(6-t-butyl-4-methylphenol). Some commercially available bis-phenolic antioxidants include ANOX^{®} 29, LOWINOX^{®} 22M46, LOWINOX^{®} 44B25, and LOWINOX^{®} 221 B46.

Typical examples of UV absorbers include but are not limited to triazines, benzotriazoles, hydroxybenzophenones, hydroxyphenyltriazines, esters of benzoic acids, and mixtures of two or more thereof. Further examples include cyclic amines. Examples include secondary, tertiary, acetylated, N-hydrocarbyloxy substituted, hydroxy substituted N-hydrocarbyloxy substituted, or other substituted cyclic amines which are further characterized by a degree of steric hindrance, generally as a result of substitution of an aliphatic group or groups on the carbon atoms adjacent to the amine function.

Examples of flame retardants include but are not limited to halogenated aromatic compounds, like halogenated biphenyls or biphenyl ethers and bisphenols. Typically the halogenated materials are brominated or polybrominated. Specific examples include bisphenols like polybrominated biphenyl, penta-, octa- and deca-brominated diphenyl ethers (BDE's), tetrabromobisphenol-A (TBBPA). Further examples include but are not limited to inorganic compounds like alumina trihydrate, antimony oxide, magnesium hydroxide, zinc borate, organic and inorganic phosphates, red phosphor and combinations thereof.

Typically, anti-dripping agents include, but are not limited to, fluoropolymers, such as a polytetrafluoroethylene polymers and copolymers. The dripping agents may be dispersed in or blended with the polymer making up the respective layer. Commercial examples of anti-dripping agents include MM5935EF from Dyneon^{®} LLC, ALGOFLON^{®} DF210 from Solvay Specialty Polymers or ENTROPY^{®} TN3500 from Shanghai Entropy Chemical.

Pigments may be inorganic or organic. Pigments may be of green, blue, red, pink, purple and white colour. Most commonly used white pigments are inorganic pigments. Examples include but are not limited to zinc oxides and titanium oxides (like TiO₂) or carbon particles. The pigments may be dispersed, blended or dissolved in the layer but may be painted or printed onto a layer.

Reflective materials include glass particles or metal particles, with glass particles being preferred. They may be dispersed, blended or dissolved in a layer.

The catalytic masterbatch can be added in an amount from 0.5 to 10% by weight, based on the total weight of the polyolefin(s); the amount is strongly depending the performance requirements to specific end uses, as known to the person skilled in the art.

By the term "silanol condensation catalyst" it is hereby intended the system able to accelerate the reaction of hydrolysis and/or condensation the cross-linkable polymer (SPO) that it is carried out by so-called moisture curing, such as in WO 91/07075 A (NESTE OY) 6/27/1991. Prior art silanol condensation catalyst include carboxylates of metals, such as tin, zinc, iron, lead and cobalt, organic bases, inorganic acids, and organic acids. Special mention should be made of dibutyl tin dilaurate, dibutyl tin diacetate, dioctyl tin dilaurate, stannous acetate, stannous caprylate, zinc caprylate, ethyl amines, dibutyl amine, hexylamines. Inorganic acids such as sulphuric acid as well as organic acids such as toluene sulphonic acid, stearic acid and maleic acid can also be uses. Preferably the silanol condensation catalyst is a metal carboxylate, more preferably a tin carboxylate.

In an aspect, the present invention provides an article comprising the multilayer assembly as defined above. Preferably, the article according to the present invention is in the form of a pipe, a piece of equipment for the chemical industry, a photovoltaic panel or an electronic device.

In another aspect, the present invention provides a process for the production of the multilayer assembly as defined above, comprising the steps of:
a) providing a polyolefin comprisng cross-linkable silanol group (SPO);
b) mixing (SPO) with a filler having reactive hydroxyl, ethoxyl, carboxyl or epoxy groups on the surface to obtain a composition (C1);
c) coating the metal surface (S) with composition (C1);
d) optionally cross-linking the silanol groups of (SPO) in composition C1) with the reactive hydroxyl, ethoxyl, carboxyl or epoxy groups on the surface of the filler to obtain a composite material (C).

The polyolefin comprising cross-linkable silanol groups (SPO) can be prepared in form of pellet, powder flack preferably in pellet form. Any conventional method can be used, the common are named Monosil (one step) and Sioplas (two-step) reactive process; one preferred method is blending cross-linkable polymer (PO), vinyl silane and free radical generator, in any conventional reactor extruder, such as, but not limited to, a Buss kneader or mono or twin screw, preferably a twin screw extruder. The conditions can vary depending upon the residence time and the half-life of the free radical generator but the temperatures profile are typically in the range from 130 to 240°C, depending mostly from the melting temperature of the PO.

Mixing homogeneously the two components in step b) can be carried out by the any conventional mixing system or reactor extruder, such as, but not limited to, a Banbury mixer, a Brabender mixer, a Buss kneader or a mono- or twin screw, preferably a twin screw, extruder. The conditions can vary the temperatures profile are typically in the range from 140 to 230°C and depending most from the melting temperature of the SPO.

Optionally, in the method of the present invention, a partial cross-linking step (d1) can be carried out after the mixing step b) and prior to the coating step c), provided that the composition (C1) is not cross-linked at such a degree that the coating of the metal surface is not obtainable. Typically, after the optional partial cross-linking step the cross-linking degree is in the range from 0% to 50%, preferably from 0% to 10%. Any conventional method for coating can be used in step c) of the process according to the present invention, preferably by hydraulic pressure at temperature range from 80°C to 150°C.

Optionally, but not necessarily, the composition of step c) is fully cross-linked (step d2) to achieve an higher performance, especially in terms of dimensional stability and thermal resistance. The maximum cross-linking degree of (C) typically is in the range from 50% to 90%, preferably from 60% to 80%.

In step d1) and /or d2), cross-linking the silanol groups of (SPO) with the reactive hydroxyl groups on the surface of the filler to obtain a composite material (C) can be carried out by any curing method using moisture, which accelerates the cross-linking process which would in any case take place in the composite material over time (e.g. approximately from 1 to 5 days at 25-30°C).

Filler (F) can be compounded also direct in a steps a) during reactive process.

It is possible, but not necessary, to add a catalytic masterbatch, that can be mixed together with (SPO) and (F) during step b) or/ during step c).

As a general reference and non-limiting example, preparation of silane-grafted polyolefin (SPO) and cross-linking with the polar groups present on the surface of the filler can be carried out according to the process described in US 2011/190411 A (BACKER, M. ET AL.) 8/4/2011 , and references cited therein.

As non-limiting examples, the coating of metal surface (S) can be carried out by any of the coating methods generally known to the person skilled in the art, such as casting, doctor blade, lamination, spin coating, dip coating, co-extrusion, by hydraulic pressure, film extrusion, cast extrusion, preferably co-extrusion by hydraulic pressure.

### Experimental part

The samples have been prepared in the following steps:
Step a): a polyolefin comprising cross-linkable silanol group (SPO), manufactured by melt processing the polyolefin high density polyethylene having density = 964 (kg/m³), MFI (2,16 at 190°C) = 8 g/10 min and melting point = 134°C in the presence of vinyltrimethoxysilane, as the compound comprising hydrolysable silane groups, in an amount of 1.86% by weigh with reference to the total weight of the SPO, and of 2,5-dimethyl- 2,5- di (tert-butylperoxy)hexane as the compound capable of generating free radicals; (SPO) has been prepared in form of pellet with extrusion in a twin screw extruder, the temperatures profile are in the range from 160 to 210°C via Sioplas reactive process.
Step b): mixing (SPO) with a filler (a E glass fiber with average fiber diameter of 10 micron and standard cut length 4,5 mm) having reactive hydroxyl groups on the surface, it has been prepared in form of pellet in a twin screw extruder, the temperatures profile are typically in the range from 160 to 200°C. The pellets obtained in a steps b) have been shaped to form a plate, that has been not cross-linked.
Step c) the coating between the metal surface (S) with (C1) obtained in step b) has been made under hydraulic pressure at 130°C. The analysis have been made before and after cross-linking the sample in hot water.

A catalytic masterbatch has been not added for the following Examples.

The following table 1 shows the results obtained using the composition of the invention in terms of adhesion of a composite material comprising a resin and glass fibres to an aluminium foil. Samples A and B are multilayer assemblies according to the invention, comprising a cross-linked polymer (XPO) that is chemically linked to the glass fibres of filler (F) via silane groups In comparative examples C1 and C2 the polymer (PO) has been mixed with a filler; it does not comprise any silane groups and is not chemically linked to the filler. The polymer used is a high density polyethylene with density = 964 (kg/m³; MFI (2,16 at 190°C) = 8 g/10 min and melting point = 134°C and the filler used is a E glass fiber with average fiber diameter of 10 micron and standard cut length 4,5 mm. The polymer and filler has been prepared in form of pellet in a twin screw extruder, the temperatures profile are typically in the range from 160 to 200°C.

Compositions A and C1 are not cross-linked and compositions B and C2 are cross-linked in hot water at 95°C for 72 hours

The adhesion tests has been measured using Instron^{®} 4204 instrument with the total adhesion area of 19.4cm² and tensile speed of 5 mm/min.

The cross-linking degree has been made according to EN ISO 10147 standard procedure and it is made just on the polymer site. 0 indicates a degree of polymerization below limit of detectability.

**Table 1 - adhesion on aluminium foil**

| Sample | Shear strength (MPa) | Degree of cross-linking |
|---|---|---|
| A (silane-grafted resin) | 2.9 | 0 |
| B (silane-grafted resin) | 2.8 | 78% |
| C1 (comparative) | 1 | 0 |
| C2 (comparative) | 0.1 | 0 |

Thus, adhesion between metal and the coating in the assembly according to the invention is greatly enhanced with respect to a comparative composition wherein the polymer is not chemically linked to the filler.

The assembly according to the invention additionally exhibits excellent dimensional stability in the presence of thermal shocks and chemical resistance, hence it is particularly suitable for application such plumbing and as oil and gas piping where resistance under severe conditions is needed.

## Claims

1. A multilayer assembly comprising at least the following layers:
i. a metal surface (S) wherein the metal is selected from the group consisting of aluminium, an aluminium alloy, iron and iron alloys, cast iron, steel, magnesium alloys, titanium or titanium alloys, copper and copper alloys;
ii. a coating, adhering directly on surface (S), of a composite material (C) comprising a cross-linked polymer (XPO) and a filler in the form of fibres (F), wherein (XPO) is the cross-linked form of a cross-linkable polymer (SPO) comprising recurring units deriving from at least one olefin and recurring units deriving from at least one monomer bearing silane groups and is chemically linked to filler (F) via the silane groups, wherein the filler (F) is selected from the group consisting of long and short fibres of glass, montmorillonite, zeolite, quartz, wollastonite, and mixtures thereof, and wherein the weight ratio of the filler (F) to the total weight of the composite material (C) is from 5 to 50%.

2. The multilayer assembly of claim 1, wherein (XPO) is a cross-linked polyethylene or a cross-linked polypropylene comprising recurring units of at least one monomer bearing silane groups.

3. The multilayer material of claim 2 wherein the filler comprises or consists of glass fibres.

4. The multilayer assembly of any of the preceding claims, wherein the metal surface (S) is an aluminium, aluminium alloy or steel surface.

5. The multilayer assembly of any of the preceding claims, wherein (SPO) has a standard density comprised between 860 kg/m³ and 970 kg/m³, preferably between 880 kg/m³ and 950 kg/m³.

6. The multilayer assembly of any of the preceding claims, wherein (SPO) has a melt flow index comprised between 0.1 g/10 min and 70 g/10 min, more preferably between 5 g/10 min and 20 g/10 min, as measured according to ASTM D1238 standard procedure under a load of 2.16 Kg at 190°C.

7. The multilayer assembly of any of the preceding claims, wherein the weight ratio of filler to the total weight of the composite material (C) is from 20 to 30%.

8. A process for the production of the multilayer assembly according to any of the preceding claims, comprising the steps of:
a) providing a polyolefin comprising cross-linkable silanol group (SPO);
b) mixing (SPO) with a filler in the form of fibres (F) having reactive hydroxyl, ethoxyl, carboxyl or epoxy groups on the surface to obtain a composition (C1), wherein said filler (F) is selected from the group consisting of long and short fibres of glass, montmorillonite, zeolite, quartz, wollastonite, and mixtures thereof, and the weight ratio of the filler (F) to the total weight of the composition (C1) is from 5 to 50%;
c) coating a metal surface (S) with composition (C1), wherein the metal is selected from the group consisting of aluminium, an aluminium alloy, iron and iron alloys, cast iron, steel, magnesium alloys, titanium or titanium alloys, copper and copper alloys;
d) optionally, cross-linking the silane groups of (SPO) in (C1) with the reactive hydroxyl groups on the surface of the filler to obtain a composite material (C).

9. The process of claim 8, further comprising a step d1), carried out after step b) and prior to step c), comprising partially cross-linking the composition (C1).

10. An article comprising the multilayer assembly according to any of claims 1-7.

11. The article of claim 10 in the form of a pipe, a piece of equipment for the chemical industry, a photovoltaic panel, an electronic device.

## Patentansprüche

1. Mehrschichtige Anordnung, aufweisend zumindest die folgenden Schichten:
i) eine Metalloberfläche (S), wobei das Metall aus der Gruppe ausgewählt ist, die aus Aluminium, einer Aluminiumlegierung, Eisen und Eisenlegierungen, Gusseisen, Stahl, Magnesiumlegierungen, Titan oder Titanlegierungen, Kupfer und Kupferlegierungen besteht;
ii) eine Beschichtung, die direkt auf der Oberfläche (S) haftet, aus einem Verbundmaterial (C), das ein vernetztes Polymer (XPO) und einen Füller in Form von Fasern (F) aufweist, wobei (XPO) die vernetzte Form eines vernetzbaren Polymers (SPO) ist, die sich wiederholende Einheiten, die sich aus zumindest einem Olefin ableiten, und sich wiederholende Einheiten, die sich von zumindest einem Monomer ableiten, das Silangruppen trägt und über die Silangruppen chemisch mit dem Füller (F) verbunden ist, aufweist, wobei der Füller (F) aus der Gruppe ausgewählt ist, die aus langen und kurzen Glasfasern, Montmorillonit, Zeolit, Quarz, Wollastonit und Mischungen daraus besteht, und wobei das Gewichtsverhältnis des Füllers (F) zu dem Gesamtgewicht des Verbundmaterials (C) von 5 bis 50 % beträgt.

2. Mehrschichtige Anordnung nach Anspruch 1, wobei (XPO) ein vernetztes Polyethylen oder ein vernetztes Polypropylen, das sich wiederholende Einheiten von zumindest einem Monomer, das Silangruppen trägt, aufweist, ist.

3. Mehrschichtiges Material nach Anspruch 2, wobei der Füller Glasfasern aufweist oder aus Glasfasern besteht.

4. Mehrschichtige Anordnung nach einem der vorgenannten Ansprüche, wobei die Metalloberfläche (S) eine Aluminium-, eine Aluminiumlegierungs- oder eine Stahloberfläche ist.

5. Mehrschichtige Anordnung nach einem der vorgenannten Ansprüche, wobei (SPO) eine Standarddichte zwischen 860 kg/m³ und 970 kg/m³, vorzugsweise zwischen 880 kg/m³ und 950 kg/m³ aufweist.

6. Mehrschichtige Anordnung nach einem der vorgenannten Ansprüche, wobei (SPO) einen Schmelzflussindex zwischen 0,1 g/10 min und 70 g /10 min, vorzugsweise zwischen 5 g/10 min und 20 g/10 min, gemessen nach der ASTM-D1238-Normprozedur unter einer Last von 2,16 Kg bei 190 °C, aufweist.

7. Mehrschichtige Anordnung nach einem der vorgenannten Ansprüche, wobei das Gewichtsverhältnis des Füllers zu dem Gesamtgewicht des Verbundmaterials (C) von 20 bis 30 % beträgt.

8. Verfahren zum Herstellen der mehrschichtigen Anordnung nach einem der vorgenannten Ansprüche, aufweisend die folgenden Schritte:
a) Bereitstellen eines Polyolefins, das eine vernetzbare Silanolgruppe (SPO) aufweist;
b) Mischen von (SPO) mit einem Füller in der Form von Fasern (F) mit reaktiven Hydroxyl-, Ethoxyl-, Karboxyl- oder Epoxidgruppen auf der Oberfläche, um eine Zusammensetzung (C1) zu erhalten, wobei der Füller (F) aus der Gruppe ausgewählt ist, die aus langen und kurzen Glasfasern, Montmorillonit, Zeolit, Quarz, Wollastonit und Mischungen daraus besteht, und das Gewichtsverhältnis des Füllers (F) zu dem Gesamtgewicht der Zusammensetzung (CI) von 5 bis 50 % beträgt;
c) Beschichten einer Metalloberfläche (S) mit der Zusammensetzung (CI), wobei das Metall aus der Gruppe ausgewählt ist, die aus Aluminium, einer Aluminiumlegierung, Eisen und Eisenlegierungen, Gusseisen, Stahl, Magnesiumlegierungen, Titan oder Titanlegierungen, Kupfer und Kupferlegierungen besteht;
d) wahlweise Vernetzen der Silangruppen von (SPO) in (CI) mit den reaktiven Hydroxylgruppen auf der Oberfläche des Füllers, um ein Verbundmaterial (C) zu erhalten.

9. Verfahren nach Anspruch 8, ferner aufweisend einen Schritt d1), der nach dem Schritt b) und vor dem Schritt c) durchgeführt wird, aufweisend ein teilweises Vernetzen der Zusammensetzung (CI).

10. Artikel, aufweisend die mehrschichtige Anordnung nach einem der Ansprüche 1 bis 7.

11. Artikel nach Anspruch 10 in der Form eines Rohrs, eines Ausrüstungsteils für die chemische Industrie, eines Photovoltaik-Panels, einer elektronischen Vorrichtung.

## Revendications

1. Ensemble multicouche comprenant au moins les couches suivantes :
i. une surface métallique (S) dans laquelle le métal est sélectionné à partir du groupe consistant en l'aluminium, un alliage d'aluminium, le fer et les alliages de fer, la fonte, l'acier, les alliages de magnésium, le titane ou les alliages de titane, le cuivre et les alliages de cuivre ;
ii. un revêtement, adhérant directement sur la surface (S), d'un matériau composite (C) comprenant un polymère réticulé (XPO) et une charge sous la forme de fibres (F), dans lequel (XPO) est la forme réticulée d'un polymère réticulable (SPO) comprenant des motifs récurrents dérivant d'au moins une oléfine et des motifs récurrents dérivant d'au moins un monomère porteur de groupements silane et est lié chimiquement à la charge (F) par l'intermédiaire des groupements silane, dans lequel la charge (F) est sélectionnée à partir du groupe consistant en des fibres longues et courtes de verre, la montmorillonite, la zéolithe, le quartz, la wollastonite et des mélanges de ceux-ci, et dans lequel le rapport pondéral de la charge (F) sur le poids total du matériau composite (C) est de 5 à 50 %.

2. Ensemble multicouche selon la revendication 1, dans lequel (XPO) est un polyéthylène réticulé ou un polypropylène réticulé comprenant des motifs récurrents d'au moins un monomère porteur de groupements silane.

3. Matériau multicouche selon la revendication 2, dans lequel la charge comprend ou consiste en des fibres de verre.

4. Ensemble multicouche selon l'une quelconque des revendications précédentes, dans lequel la surface métallique (S) est une surface en aluminium, en alliage d'aluminium ou en acier.

5. Ensemble multicouche selon l'une quelconque des revendications précédentes, dans lequel (SPO) présente une densité standard comprise entre 860 kg/m³ et 970 kg/m³, de préférence entre 880 kg/m³ et 950 kg/m³.

6. Ensemble multicouche selon l'une quelconque des revendications précédentes, dans lequel (SPO) présente un indice de fluidité compris entre 0,1 g/10 min et 70 g/10 min, plus préférentiellement entre 5 g/10 min et 20 g/10 min, tel que mesuré selon la procédure standard ASTM D1238 sous une charge de 2,16 kg à 190 °C.

7. Ensemble multicouche selon l'une quelconque des revendications précédentes, dans lequel le rapport pondéral de la charge sur le poids total du matériau composite (C) est de 20 à 30 %.

8. Procédé de production de l'ensemble multicouche selon l'une quelconque des revendications précédentes, comprenant les étapes consistant à :
a) fournir une polyoléfine comprenant un groupement silanol réticulable (SPO) ;
b) mélanger (SPO) avec une charge sous la forme de fibres (F) présentant des groupements hydroxyle, éthoxyle, carboxyle ou époxy réactifs sur la surface pour obtenir une composition (C1), dans lequel ladite charge (F) est sélectionnée à partir du groupe consistant en des fibres longues et courtes de verre, la montmorillonite, la zéolithe, le quartz, la wollastonite, et des mélanges de ceux-ci, et le rapport pondéral de la charge (F) sur le poids total de la composition (C1) est de 5 à 50 % ; c) revêtir une surface métallique (S) avec la composition (C1), dans lequel le métal est sélectionné à partir du groupe consistant en l'aluminium, un alliage d'aluminium, le fer et les alliages de fer, la fonte, l'acier, les alliages de magnésium, le titane ou les alliages de titane, le cuivre et les alliages de cuivre ; d) facultativement, réticuler les groupements silane de (SPO) dans (C1) avec les groupements hydroxyle réactifs sur la surface de la charge pour obtenir un matériau composite (C).

9. Procédé selon la revendication 8, comprenant en outre une étape d1), réalisée après l'étape b) et avant l'étape c), comprenant la réticulation partielle de la composition (C1).

10. Article comprenant l'ensemble multicouche selon l'une quelconque des revendications 1-7.

11. Article selon la revendication 10 sous la forme d'un tuyau, d'un équipement pour l'industrie chimique, d'un panneau photovoltaïque, d'un dispositif électronique.
